# EUROPEAN PATENT SPECIFICATION

(11) **EP 3 779 354 B1**
(45) Date of publication and mention of the grant of the patent: **19.02.2025**
(21) Application number: 19781408.0
(22) Date of filing: 02.04.2019
(51) Int. Cl.: A47L 9/00, A47L 9/10, A47L 9/28, B25J 9/16, B25J 11/00, G01B 11/22, G01S 7/4912, G01S 17/36, G01S 17/894, G01B 11/02, G01B 11/24

(54) **ROBOT CLEANER HAVING CONSTRAINT PREVENTION FILTER**
REINIGUNGSROBOTER MIT EINSCHRÄNKUNGSVERHINDERUNGSFILTER
ROBOT NETTOYEUR AYANT UN FILTRE DE PRÉVENTION DE LIMITATION DE FONCTIONNEMENT

(30) Priority: 02.04.2018 KR 20180038375; 02.04.2018 KR 20180038376
(43) Date of publication of application: 17.02.2021
(73) Proprietor: LG Electronics Inc., Yeongdeungpo-gu Seoul 07336 (KR)
(72) Inventor: CHOI, Hyukdoo, Seoul 08592 (KR); HONG, Jihye, Seoul 08592 (KR)
(74) Representative: Vossius & Partner Patentanwälte Rechtsanwälte mbB
(86) International application number: PCT/KR2019/003900
(87) International publication number: WO 2019/194550

(56) References cited:
- EP-A1- 3 076 845
- EP-B1- 3 076 845
- WO-A1-2014/078005
- WO-A1-2017/082826
- DE-A1- 102017 200 879
- JP-A- 2014 166 207
- KR-A- 20150 063 218
- KR-A- 20150 082 262
- KR-A- 20160 039 378
- KR-A- 20160 142 508
- KR-A- 20160 142 508
- KR-B1- 101 292 537
- US-A1- 2016 374 527

## Description

### [Technical Field]

The present invention relates to a robot cleaner including a filter for preventing the cleaner from being constrained by an obstacle.

The present disclosure also relates to a depth sensor control system to accurately measure a depth of an object by automatically adjusting an amount of light received by a sensor.

### [Background Art]

Cleaners remove foreign substances and clean an indoor space and vacuum cleaner is generally used to suction the foreign substances based on a suction power.

In recent years, robot cleaners have been developed to perform autonomous driving to move by themselves and remove foreign substances from the indoor floor without user's labor.

The robot cleaner detects a cleaning area and obstacles using a sensor of the cleaner and automatically performs cleaning while moving within the cleaning area. If the robot cleaner consumes a power of a battery in the device, the robot cleaner moves to a charging station which is provided at a predetermined position, charges the battery, and returns back to its original position to perform the cleaning.

In addition, an agitator is disposed under the robot cleaner, and when driving, rotates to sweep away dust or dirt from the floor, thereby facilitating suction.

Hereinafter, with reference to Korean Patent No. 10-1292537 and Korean Patent No. 10-0677275, a robot cleaner in related art is described.

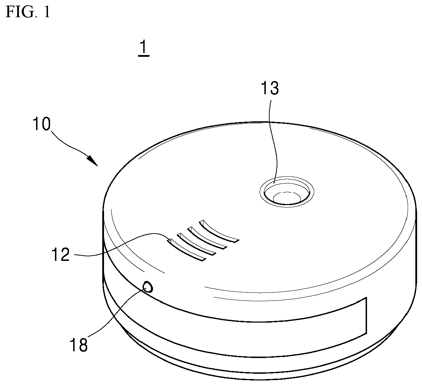

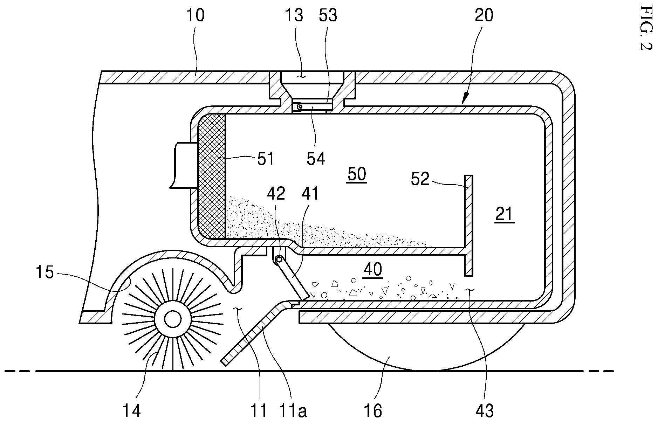

FIGS. 1 to 3 show a robot cleaner in related art. Reference numerals shown in the drawings are applied only to the description of FIGS. 1 to 3.

Referring to FIGS. 1 and 2, a robot cleaner in the related art disclosed in a Korean patent No. 10-1292537 includes a main body 10 defining an appearance, a dust collecting device 20 disposed in the main body 10 and to collect dust, and a blowing device 30 that communicates with the dust collecting device 20 and configured to generate a suction force to suction dust.

A suction inlet 11 is defined at a lower portion of the main body 10 defining the appearance to suction dust or the like from the floor. The main body 10 includes a discharge outlet 12 and an exhaust outlet 13 at an upper portion thereof, the discharge outlet 12 discharges air suctioned by the blowing device 30 to an outside of the main body 10 and the exhaust outlet 13 discharges dust collected by a dust collecting device 20 to a docking station when a robot cleaner 1 is docked with the docking station (not shown).

A rotating brush 14 (i.e., an agitator) is disposed under the main body 10 to sweep or scatter dust or dirt from the floor, thereby increasing duct suction efficiency.

However, the robot cleaner in the related art has a problem in that the robot cleaner suctions a large obstacle based on an increased suction power, and thus, the robot is constrained by the obstacle.

Referring to FIG. 3, the robot cleaner in the related art disclosed in Korean Patent No. 10-0677275 includes an agitator 300 disposed inside a suction head and rotated by the motor 200 and a speed detection means 400 to detect a speed based on a number of rotations of the agitator 300. The robot cleaner further includes a control means 100 to compare a speed detection signal output by the speed detection means 400 with a speed command value preset by a user, and output a drive control signal based on a result of comparing therm.

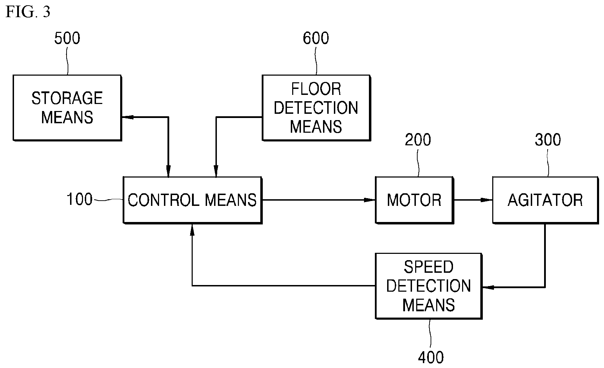

However, there is a problem in that, if the agitator 300 is caught by foreign substrates and stops rotation, the robot cleaner in FIG. 3 has difficulty in responding to the situation.

In addition, there is a problem in that, as the robot cleaner in the related art may not distinguish avoiding obstacles from climbing obstacles, the robot cleaner in the related art avoids obstacles, thereby reducing the cleaning area.

In addition, there is a problem in that the robot cleaner in the related art does not identify an obstacle and is repeatedly constrained by a same object, thereby blocking proper cleaning of the robot cleaner in the related art.

For reference, reference numerals used in FIGS. 1 to 3 are applied only to FIGS. 1 to 3.

For example, an automatic exposure control generally used for an image sensor is designed to maintain target brightness of continuous input images, and such exposure control is performed by controlling a gain and an exposure time of the image sensor.

An automatic exposure control device receives image data from the image sensor, processes the received image data, and transmits, to the sensor, information on accumulated time and gain determined to be appropriate.

Exposure is determined based on a charge integration time and gain. The charge integration time refers to a time taken until one pixel is reset, receives light again, and reads an amount of integrated charge. In addition, the gain refers to a degree of amplifying a charge generated in proportion to the integration time by an analog or digital method. In general, when a sufficient amount of lighting is provided, exposure control is performed by maintaining the gain at 1 and only adjusting the charge integration time.

However, in an environment in which insufficient lighting is provided, a sufficiently bright image may not be obtained even when the exposure time is maximized. A gain greater than 1 may be applied to obtain a bright image.

Hereinafter, with reference to Korean Patent No. 10-1694621 and Korean Patent No. 10-2015-0037693, an image sensor to perform automatic exposure control in the related art is described.

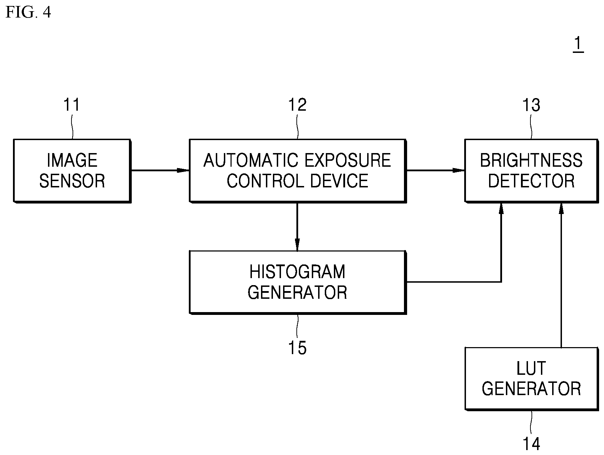

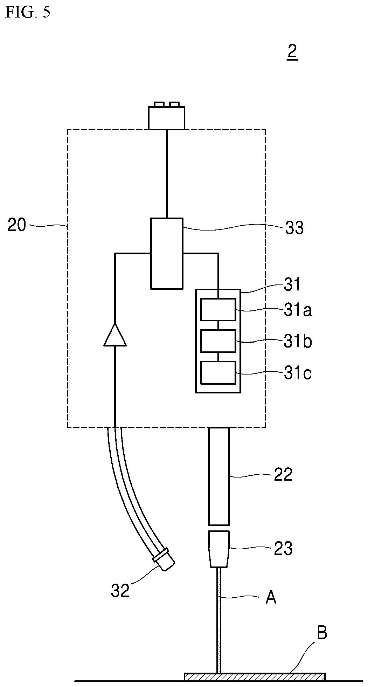

FIGS. 4 and 5 show an image sensor in related art.

Referring to FIG. 4, a brightness estimation apparatus 1 of an image sensor in related art according to Korean Patent No. 10-1694621 includes an automatic exposure control device 12, and a brightness detector 13, a look up table (LUT) generator 14, and a histogram generator 15.

The image sensor 11 includes a capturing sensor to output an RGB signal based on an intensity of light. The brightness detector 13 maps a sensor gain and an exposure time output from the automatic exposure control device 12 to a sensor gain and an exposure time stored in the LUT generator 14 and generate brightness information of any color region and brightness information of the color region per one pixel.

However, there is a limitation in that the method is difficult to be directly applied to a 3D sensor to obtain distance information on distance from an object, which is studied recently.

Referring to FIG. 5, a laser device 2 according to Korean Patent No. 10-2015-0037693 adjusts light output using a laser optical sensor.

For example, the laser device 2 uses a sensor 32 to measure infrared rays emitted from a laser light (A)-transmitting point of a processing material (B) or measure a temperature of the transmitted point and a control module 33 to adjust output in real time.

In this case, the control module 33 controls the sensor 32 to measure a temperature or an amount of light of the laser-transmitted point for maintaining an appropriate amount of light incident on the sensor 32 and controls a driving signal applied to a laser module 31 based on the measured temperature and amount of light. A light guide 22 and a light transmitter 23 each output the laser light (A) output from the laser module 31.

However, there is a problem in that the light output adjust device requires an additional sensor to measure the temperature of and the amount of light at the transmitted point, resulting in an increase in manufacturing cost.

In addition, the light output adjust device in the related art takes a relatively longer time to measure the temperature of the transmitted point, thereby increasing a time period for which the light amount is adjusted.

For reference, reference numerals used in FIGS. 4 and 5 are applied only to FIGS. 4 to 5.

KR 101 292 537 B1, US 2016/374527 A1, EP 3 076 845 A1 and KR 2016 0142508 A relate to robot cleaners.

### [Disclosure]

### [Technical Problem]

The present invention provides a robot cleaner including a constraint prevention filter to prevent the cleaner from being constrained resulting from a cleaning nozzle being caught by an obstacle.

The present disclosure also provides a robot cleaner configured to control a constraint prevention filter to avoid an obstacle or climb an obstacle according to types of obstacles.

The present disclosure further provides a robot cleaner to store types and positions of obstacles and move while avoiding the obstacles based on stored data.

The present disclosure further provides a depth sensor control system configured to automatically adjust an amount of light to accurately measure a depth of an object.

The present disclosure further provides a depth sensor control system to reduce cost incurring for controlling the amount of light by adjusting the amount of incident light by performing a function for measuring the infrared intensity of the depth sensor.

The present disclosure further provides a depth sensor control system to provide a fast response time to control an amount of light for accurately measuring depth of an object.

The objects of the present disclosure are not limited to the above-mentioned objects and other objects and advantages of the present disclosure which are not mentioned may be understood by the following description and more clearly understood by the embodiments of the present disclosure. It will also be readily apparent that the objects and the advantages of the present disclosure may be implemented by features described in claims and a combination thereof.

### [Technical Solution]

The invention is defined in the independent claim. Dependent claims describe preferred embodiments.

According to the present invention, a robot cleaner includes a constraint prevention filter disposed in front of an agitator to prevent the robot cleaner from being constrained resulting from a cleaning nozzle being caught by an obstacle.

In addition, the robot cleaner according to the present disclosure includes a controller to classify an obstacle detected in front of the robot cleaner into an avoiding obstacle or a climbing obstacle and control a position of the constraint prevention filter, thereby selecting an appropriate operation method according to types of obstacles.

In addition, according to the present disclosure, the robot cleaner includes a controller to control a memory to store a type and a position of the detected obstacle and determine a driving method based on the stored data in a next driving, thereby preventing the robot cleaner from being continuously constrained by a same obstacle.

In addition, according to an example, a depth sensor control system includes a sensor controller to control an exposure time of a light receiver and an output of a light emitter to automatically adjust an appropriate amount of light for measuring the depth of a target object.

In addition, according to an example, the depth sensor control system measures the intensity and frequency of infrared rays (IR) reflected from the object using the light receiver and adjusts the amount of light based on a histogram created based on this, to measure accurate depth of the object without additional equipment.

### [Advantageous Effects]

According to the present invention, a robot cleaner includes a constraint prevention filter to prevent the robot cleaner from being constrained resulting from a cleaning nozzle being caught by an obstacle. Therefore, the constraint prevention filter may prevent the robot cleaner from being stopped by the obstacle while cleaning or contamination to other cleaning areas resulting from foreign substances adsorbed onto a cleaning nozzle.

In addition, according to the present disclosure, the robot cleaner may control to avoid or climb an obstacle according to types of obstacles and select an optimal driving method based on types of the obstacles. Therefore, the robot cleaner may extend a range of cleaning area and prevent the cleaning nozzle from being caught by the obstacle, thereby improving cleaning efficiency.

In addition, according to the present disclosure, the robot cleaner may store information on types and positions of obstacles and move while avoiding the obstacles based on the stored data to prevent the robot cleaner from being continuously constained by the same obstacle. Therefore, reliability of the operation of the robot cleaner may be enhanced and user satisfaction may be improved.

In addition, according to an example, a depth sensor control system may automatically adjust an amount of light to accurately measure an accurate depth of an object to prevent a phenomenon in which the depths of some areas are not measured based on external light source or reflectance of a target object. Therefore, the depth sensor may accurately measure the depth of the target object, thereby improving reliability of the depth sensor.

In addition, according to an example, the depth sensor control system may control the amount of incident light by performing a function for measuring the infrared intensity of the depth sensor to measure the exact depth of the target object without light-amount controlling components. Therefore, manufacturing cost of the depth sensor may be reduced, thereby improving the profit of the manufacturer.

In addition, according to an example, the depth sensor control system controls the exposure time of the light receiver and the output of the light emitter using a histogram created based on the intensity of infrared light measured by the light receiver, thereby obtaining a fast response time for controlling the amount of light to accurately measure the depth of the object. Therefore, an overall reaction speed of the system using the depth sensor may be increased and the satisfaction of the user using the device may be improved.

Further to the effects described above, specific effects of the present disclosure are described together while describing detailed matters for implementing the present disclosure.

### [Description of Drawings]

FIGS. 1 to 3 show a robot cleaner in related art.
FIGS. 4 and 5 show an image sensor in related art.
FIG. 6 is a perspective view showing a robot cleaner according to an embodiment of the present invention.
FIG. 7 is a plan view showing the robot cleaner in FIG. 6.
FIG. 8 is a cross-sectional view showing an operation of the robot cleaner in FIG. 6.
FIG. 9 shows a configuration of a constraint prevention filter in FIG. 6.
FIG. 10 is a block diagram showing components of the robot cleaner in FIG. 6.
FIG. 11 is a flow chart showing an operation of the robot cleaner in FIG. 6.
FIGS. 12 to 14 show the operation of the robot cleaner according to an embodiment of the present invention.
FIG. 15 is a block diagram showing a depth sensor control system according to an example.
FIG. 16 shows a method of driving the depth sensor control system in FIG. 15.
FIG. 17 is a graph showing a histogram used by a sensor controller in FIG. 15.
FIG. 18 is a flowchart showing an operation of the depth sensor control system in FIG. 15.

### [Best Mode]

The terms or words used in the present disclosure and claims are not to be construed as limiting the ordinary or dictionary meanings and are to be construed as meaning and concepts corresponding to the technical ide of the present disclosure on the basis of a principle that an inventor can suitably define the concept of a term in order to explain the subject matter that the inventor regards as his disclosure in a best way. Further, embodiments and drawings in the present disclosure are merely a most preferable embodiment, but not represent all technical ideas of the present disclosure, and thus, it is to be understood that various equivalents and modifications which can replace them at a time of filing can be made.

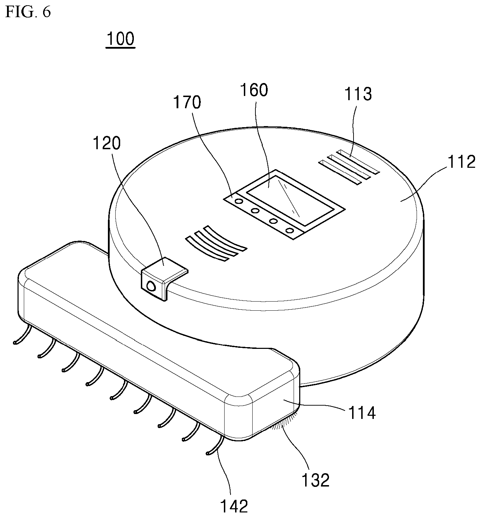

Hereinafter, a robot cleaner according to an embodiment of the present invention is described in detail with reference to FIGS. 6 to 14.

FIG. 6 is a perspective view showing a robot cleaner according to an embodiment of the present invention.

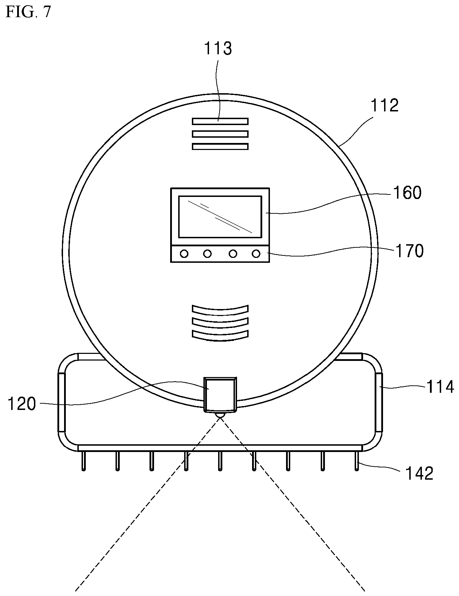

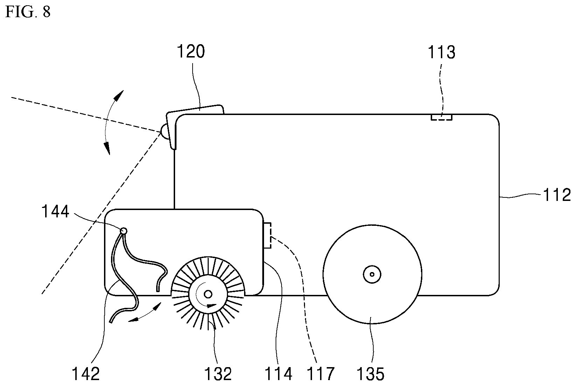

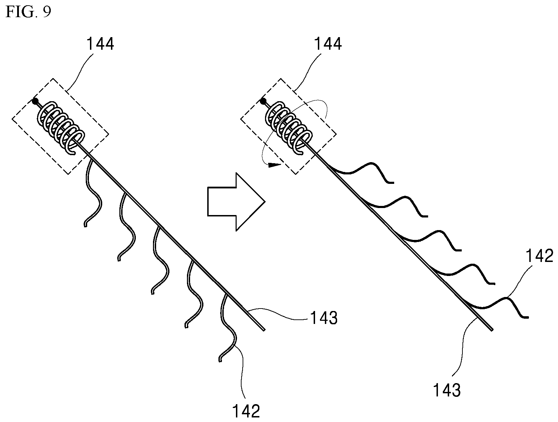

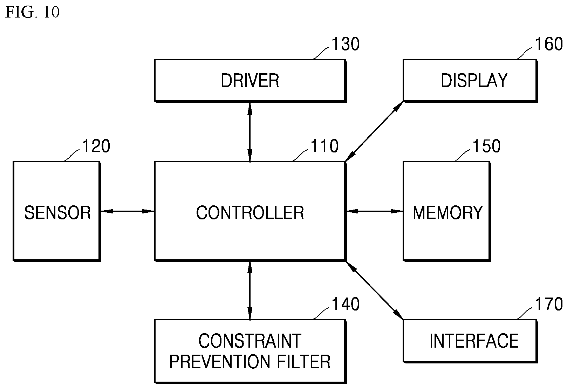

FIG. 7 is a plan view showing the robot cleaner in FIG. 6. FIG. 8 is a cross-sectional view showing an operation of the robot cleaner in FIG. 6. FIG. 9 shows components of a constraint prevention filter in FIG. 6. FIG. 10 is a block diagram showing components of the robot cleaner in FIG. 6.

Referring to FIGS. 6 to 10, a robot cleaner 100 according to an embodiment of the present disclosure includes housings 112 and 114, a controller 110, a sensor 120, a driver 130, an agitator 132, a constraint prevention filter portion 140, a memory 150, a display 160, and an interface 170.

The housings 112 and 114 define appearance of the robot cleaner 100.

For example, the housings 112 and 114 include a main body 112 including a suction motor to generate a suction power and a nozzle 114 to sweep dust or foreign substances from the floor to facilitate suction.

The controller 110 and the driver 130 are disposed in the main body 112, the sensor 120 is disposed at one side thereof, and the display 160 and the interface 170 are each disposed on an upper surface thereof.

Although not clearly shown in the drawing, the main body 112 may include a suction inlet 117 (see FIG. 8) to introduce air suctioned through the nozzle 114, a suction motor (not shown) to generate a suction power, a dust bin (not shown) to separate and store foreign substances of the suctioned air, and a discharge outlet 113 to discharge the suctioned air to an outside thereof.

In this case, the suction inlet 117 may be defined between the nozzle 114 and the main body 112 and the discharge outlet 113 may be defined on the upper surface of the main body 112.

The nozzle 114 corresponds to a portion through which the robot cleaner 100 suctions foreign substances. The nozzle 114 has a shape protruding from one side of the main body 112. In this case, a protruding direction of the nozzle 114 may be referred to as a forward direction with respect to the main body 112. The nozzle 114 has an upper surface lower than the upper surface of the main body 112.

For reference, some of the components of the main body 112 may be disposed at the nozzle 114.

An agitator 132 and a constraint prevention filter portion 140 are disposed in the nozzle 114. The agitator 132 sweeps or scatters dust or dirt on the floor under the robot cleaner 100. Details of the constraint prevention filter portion 140 are described below.

The controller 110 controls the operations of all components of the robot cleaner 100.

The controller 110 receives the data sensed by the sensor 120 and controls an operation of the driver 130, the agitator 132, or the constraint prevention filter portion 140 based on the received data.

For example, the controller 110 determines the type of obstacle based on the data sensed by the sensor 120 and changes a driving method based o a result of determining the type of obstacle. For example, the controller 110 may classify the obstacle as an avoiding obstacle or a climbing obstacle.

The avoiding obstacle refers to an obstacle that may interfere with movement of the robot cleaner 100 when the robot cleaner 100 moves in a moving direction. For example, the avoiding obstacle may include an obstacle having a greater height and an obstacle made of thin fabric. The robot cleaner 100 may not move over the obstacle having the greater height and the obstacle made of thin fabric may block movement of the robot cleaner 100 in the moving direction thereof or may be rolled into the robot cleaner 100 when the robot cleaner 100 moves in the moving direction thereof.

The climbing obstacle refers to an obstacle over which the robot cleaner 100 may climb. For example, the climbing obstacles may include rigid door frames or wide, heavy carpets.

The controller 110 may determine the type of obstacle based on previously stored data.

In addition, for obstacle classification, the controller 110 may use a deep learning algorithm to perform self-learning based on the collected data, a logistic regression algorithm, a support vector machine (SVM) algorithm that extends the concept of perceptron, and a convolutional neural network (CNN) algorithm that learns based on randomly initialized parameters.

The CNN algorithm learns randomly initialized parameters of neural network as learning data and outputs a probability corresponding to each of classes (e.g. two classes of climbing obstacle/avoiding obstacle) when an image is input. For example, when the robot cleaner 100 encounters an obstacle, the CNN algorithm calculates a probability of an climbing obstacle and a probability of an avoiding obstacle based on the detected obstacle from the image and selects one having high probability among the two probabilites.

For reference, these algorithms are only a few examples that may be used by the controller 110, and the present disclosure is not limited thereto.

The sensor 120 is disposed at one side of the main body 112 and detects an obstacle positioned in front of the robot cleaner 100. The sensor 120 transmits the measured data to the controller 110. The controller 110 determines an obstacle based on the data received from the sensor 120.

The sensor 120 may include an RGB sensor to measure an image of an obstacle, an ultrasonic sensor, an infrared sensor, a depth sensor to measure a depth of the obstacle, an RGB-D sensor, and the like.

As the sensor 120 has a certain measurement range, the sensor 120 may be tilted forward, rearward, leftward, and rightward on the main body 112 to cover a wide area.

For reference, only one sensor 120 is shown in the drawing; however, a plurality of sensors may be disposed on the main body 112 or the nozzle 114 to detect a forward space, a rearward space, and a side space of the main body 112.

The agitator 132 includes a rotating brush to sweep or scatter dust or dirt on the floor under the robot cleaner 100.

The agitator 132 is disposed under the main body 112 or the nozzle 114 to contact a portion of the rotating brush with the floor. The agitator 132 may rotate to move the robot cleaner 100 forward and the rotation speed thereof may be controlled by the controller 110.

The driver 130 generates a driving force to move the robot cleaner 100. Although not clearly shown in the drawings, the driver 130 includes a pair of wheels 135 disposed under the main body 112 and a drive motor (not shown) to generate a driving force for rotating the wheels 135.

The operation of the driver 130 is controlled by the controller 110. The controller 110 controls the pair of wheels 135 to rotate in a same direction for moving the main body 112 forward or to rotate the pair of wheels 135 in different directions for rotating the main body 112.

The constraint prevention filter portion 140 performs a function for blocking entry of the obstacle provided at a position in a moving direction of the robot cleaner 100 into the agitator 132.

The constraint prevention filter portion 140 includes a constraint prevention filter 142, a rotary shaft 143 to couple to the constraint prevention filter 142, and a filter driver 144 to control a position of the rotary shaft 143.

The constraint prevention filter 142 has a shred shape including a plurality of thin and long strings and may prevent an obstacle of a predetermined size or more from entering the inner side of the main body 112.

In order to accomplish the function, the constraint prevention filters 142 may be disposed on the rotary shaft 143 at predetermined distances. As shown in FIG. 9, the constraint prevention filter 142 may have an inwardly concaved and has one end facing outward such that the constraint prevention filter 142 has resistance of predetermined magnitude and filters out the obstacles. The constraint prevention filter 142 has the shape such that the constraint prevention filter 142 filters out the obstacles and the resistance thereof is reduced when the end of prevention filter 142 which is shred-shaped contacts the floor.

In this case, a portion of the constraint prevention filter portion 140 may protrude to an outside of the nozzle 114.

The constraint prevention filter 142 may be made of an elastic material. Therefore, the constraint prevention filter 142 moves while blocking the obstacle based on elasticity itself when a light obstacle is provided and bends inward when a heavy obstacle is provided.

The rotary shaft 143 of the constraint prevention filter portion 140 may be fixed inside the nozzle 114 and rotate. The filter driver 144 is disposed at one side of the rotary shaft 143 to control the position of the rotary shaft 143.

The filter driver 144 may rotate the rotary shaft 143 to adjust the position of the constraint prevention filter 142.

Although not clearly shown in the drawings, the filter driver 144 may include a nozzle sensor (not shown) to measure a magnitude of resistance applied to the constraint prevention filter 142. The controller 110 may adjust the position of the constraint prevention filter 142 based on data measured by the nozzle sensor (not shown).

In addition, the filter driver 144 may include a spring or a drive motor to rotate the rotary shaft 143 when resistance having a predetermined magnitude or more is applied to the constraint prevention filter 142 and restore the position of the constraint prevention filter 142 when the resistance is not applied.

For reference, the matters described above are only example components of the filter driver 144 and the configuration of the filter driver 144 may be variously modified and implemented.

The memory 150 stores a control command code and control data for controlling the robot cleaner 100. In addition, the memory 150 stores data measured by the sensor 120 while the robot cleaner 100 is moving, types of obstacles determined by the controller 110, and position coordinate data of the obstacle.

The memory 150 may include at least one of a volatile memory or a nonvolatile memory. In addition, the memory 150 may be a nonvolatile medium such as a hard disk (HDD), a solid state disk (SSD), an embedded multi-media card (eMMC), and a universal flash storage (UFS).

The display 160 includes a display to indicate an operation state of the robot cleaner 100. For example, the display 160 may display information on the remaining amount of the battery, the remaining capacity of the internal dust bin, and an operation mode of the robot cleaner 100.

The interface 170 may receive an operation method from a user. In the drawing, the interface 170 configured as a button-type interface is illustrated, but the present disclosure is not limited thereto. For example, the interface 170 may be replaced with a touch panel provided on the display 160, a microphone to receive a user's voice command, a user gesture recognizing device, and the like.

Additionally, the robot cleaner 100 may further include a power supply having a built-in battery for supplying internal power or to receive power from an external device, and a communicator to exchange data with an external device.

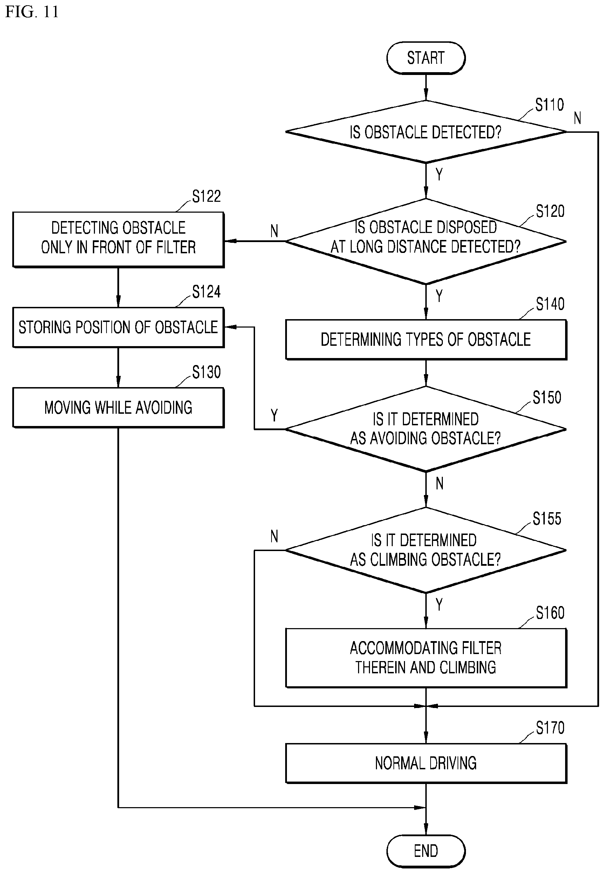

FIG. 11 is a flowchart showing an operation of the robot cleaner in FIG. 6.

Referring to FIG. 11, for a robot cleaner 100 according to an embodiment of the present disclosure, a controller 110 determines whether an obstacle is detected in a space in a moving direction of the robot cleaner 100 based on data measured by a sensor 120 (S 110).

Subsequently, when the obstacle is provided at a position in the moving direction of the robot cleaner 100, the controller 110 determines whether the detected obstacle is a distant obstacle far away farther than a reference distance (S120).

Subsequently, when the detected obstacle is placed closer than the reference distance, the controller 110 determines whether the obstacle is detected only in front of the constraint prevention filter 142 (S122).

If the obstacle is not detected at a position farther than the reference distance and is detected only in front of the constraint prevention filter 142, the obstacle is caught by the constraint prevention filter 142 and a height thereof is increased in front of the nozzle 114, which signifies that the robot cleaner 100 is constrained by the obstacle.

For example, in the case of fabric, the constraint prevention filter 142 may prevent the fabric from entering the agitator 132, and in this process, the fabric is pushed by the nozzle 114, thereby increasing the height thereof.

In this case, as the fabric having the increased height may have greater resistance and apply a load to the robot cleaner 100, the controller 110 stores the position information of the obstacle located in front of the nozzle 114 (S124) and controls the robot cleaner to move while avoiding the obstacle (S130).

For reference, the fabric was exemplified above, but obstacles such as crumpled paper, rubbers, and mats may also interfere with the movement of the robot cleaner 100 if the constraint prevention filter 142 is caught by the obstacles such as the crumpled paper, the rubbers, and the mats. Therefore, controller 110 stores the position information of the obstacle and controls the robot cleaner to perform the cleaning operation by avoiding the obstacle.

If the detected obstacle is located farther than the reference distance, the controller 110 determines the type of the obstacle (S140).

Subsequently, the controller 110 determines whether the detected obstacle is an avoiding obstacle (S150).

The avoiding obstacle refers to an obstacle that may interfere with the movement of the robot cleaner 100 when the robot cleaner 100 moves in the moving direction thereof.

For example, the robot cleaner 100 may include a high-height obstacle, an obstacle obstructing the moving direction of the robot cleaner 100, and an obstacle that may be rolled into the robot cleaner 100.

Subsequently, if the obstacle is detected as an avoiding obstacle, the controller 110 stores the position information of the corresponding obstacle (S124).

Subsequently, the controller 110 controls the robot cleaner 100 to move while avoiding the avoiding obstacle (S130).

The controller 110 determines whether the detected obstacle is a climbing obstacle (S155). The climbing obstacle refers to an obstacle over which the robot cleaner 100 may climb. For example, climbing obstacles may include rigid door frames or wide and heavy carpets.

If the obstacle is detected as a climbing obstacle, the controller 110 controls the filter driver 144 in order for the constraint prevention filter 142 not to be caught by the climbing obstacle and accommodate the constraint prevention filter 142 into the nozzle 114.

For reference, the controller 110 may measure the resistance applied to the constraint prevention filter 142, and when a resistance equal to or greater than a reference value is applied to the constraint prevention filter 142, the controller 110 may control the constraint prevention filter 142 to be accommodated in the nozzle 114. When a resistance equal to or less than the reference value is applied to the constraint prevention filter 142, the controller 110 may control the robot cleaner 100 to move in the moving direction thereof without adjusting the position of the constraint prevention filter 142.

In addition, as the constraint prevention filter 142 is made of elastic material, the constraint prevention filter 142 mat be naturally accommodated in the nozzle 114 when resistance having a magnitude equal to or greater than a predetermined magnitude is applied by a climbing obstacle without additional control of the filter driver 144.

Subsequently, the controller 110 controls the driver 130 in order for the robot cleaner 100 to climb over the climbing obstacle (S160). For example, the controller 110 may control the driver 130 in order for the robot cleaner 100 to easily climb the obstacle because the height of the main body 112 is increased.

Subsequently, if an obstacle is not detected, the controller 110 normally drives the robot cleaner 100 (S170).

That is, as the robot cleaner 100 according to the present disclosure is controlled to avoid or climb the obstacle according to the type of obstacle, thereby selecting an optimal driving method according to the type of obstacle.

Therefore, the range of cleaning area of the robot cleaner may be extended and cleaning efficiency thereof may be improved by preventing the cleaning nozzle from being caught by the obstacle.

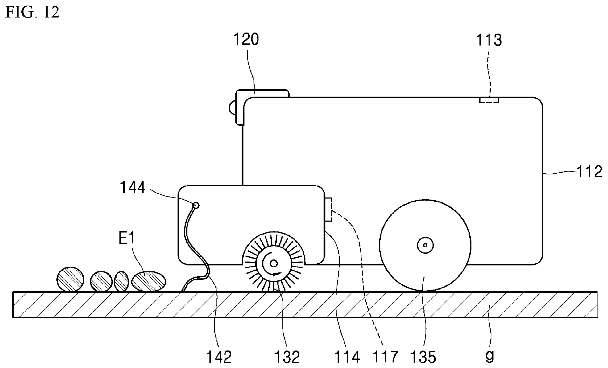

FIGS. 12 to 14 show an operation of a robot cleaner according to an embodiment of the present disclosure.

Referring to FIG. 12, when an obstacle E1 is introduced into a robot cleaner 100, an agitator 132 may be constrained by the obstacle E1 and the operation thereof may be stopped. In addition, when the agitator 132 continuously performs the operation while being constrained by the obstacle E1, a load is applied to the robot cleaner 100, thereby increasing a probability of causing a failure.

To prevent the above issue, the sensor 120 detects an obstacle located in an area in a moving direction of the robot cleaner 100, but obstacles E1 having a low height, which cannot be detected by the sensor 120, may be present in the cleaning area.

In this case, for the robot cleaner 100 of the present disclosure, the constraint prevention filter 142 faces forward and downward the nozzle 114 to prevent entry of the obstacle E1, which is not detected by the sensor 120, into the agitator 132.

Therefore, the constraint prevention filter 142 may prevent the operation of the robot cleaner 100 from being stopped by being caught by the obstacle or contamination on other cleaning areas, resulting from adsorption of foreign substances to the agitator 132, while cleaning.

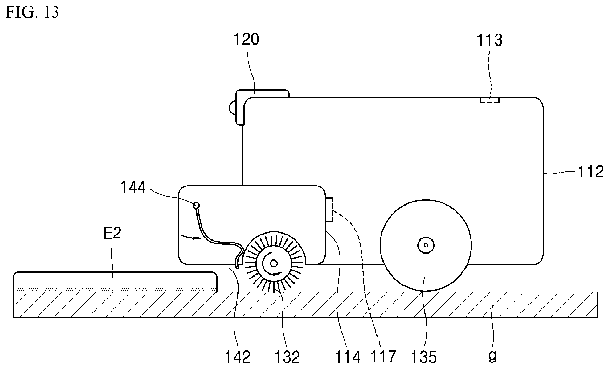

Referring to FIG. 13, resistance having greater magnitude may be applied to the constraint prevention filter 142 when the robot cleaner is caught by an obstacle (E2) (e.g., a carpet) that is relatively heavy or attached to the floor among the obstacles not detected by the sensor 120.

In this case, as the constraint prevention filter 142 is made of elastic material, the constraint prevention filter 142 may be bent inward and accommodated in the nozzle 114 based on the resistance caused by the heavy obstacle E2.

The constraint prevention filter portion 140 measures the resistance applied to the constraint prevention filter 142, and when the measured resistance is greater than the reference value, the controller 110 controls the filter driver 144 to accommodate the constraint prevention filter 142 in the nozzle 114.

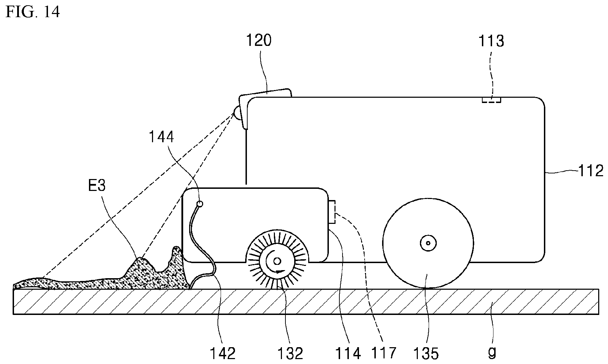

Referring to FIG. 14, when the constraint prevention filter 142 is caught by the obstacle E3 that is not detected by the sensor 120 and is accumulated in front of the nozzle 114, the obstacle E3 having the increased height causes high resistance to apply a load to the robot cleaner 100.

In this case, when the height of the obstacle E3 is increased, the sensor 120 may detect the presence of the obstacle E3. The controller 110 determines that the obstacle E3 is not detected when the obstacle E3 is positioned in an area far away by a distance equal to or greater than the reference distance, but is suddenly detected when the obstacle E3 is positioned in an area far away by a distance equal to or less than the reference distance.

In this case, the controller 110 stores the position information of the obstacle E3 located in front of the nozzle 114 and controls the driver 130 to avoid the obstacle E3. Therefore, even if the robot cleaner 100 encounters the obstacle E3 during a next driving, the robot cleaner 100 may move while avoiding the obstacle E3 in advance before a predetermined distance.

That is, the robot cleaner 100 of the present disclosure stores the position information of the obstacle E3 and moves while avoiding the obstacle E3 based on the stored data, thereby preventing the robot cleaner 100 from being continuously constrained by the same obstacle E3.

Therefore, reliability of the operation of the robot cleaner may be enhanced and user satisfaction may be improved.

For reference, reference numerals used in FIGS. 6 to 14 are applied only to FIGS. 6 to 14.

Sensing devices to sense distance from a target object include a three-dimensional (3D) camera, a depth sensor, a motion capture sensor, and a laser radar.

The depth sensor uses a time of flight (TOF) method.

The TOF method is a method of measuring a light flight time until light reflected from a target object is received by a sensor after transmitting the light onto the target object. The depth sensor measures a distance from the object by measuring a time period for which the light emitted from the light source returns after being reflected by the object using the above method.

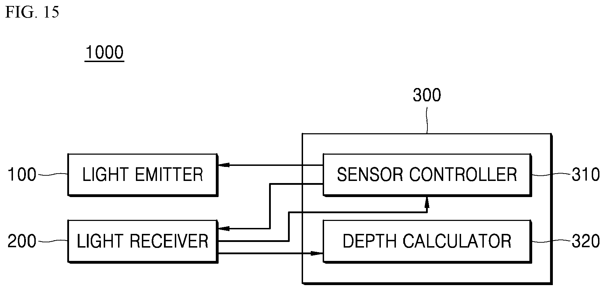

Hereinafter, a depth sensor control system to control an amount of light incident on the depth sensor is described in detail with reference to FIGS. 15 to 18.

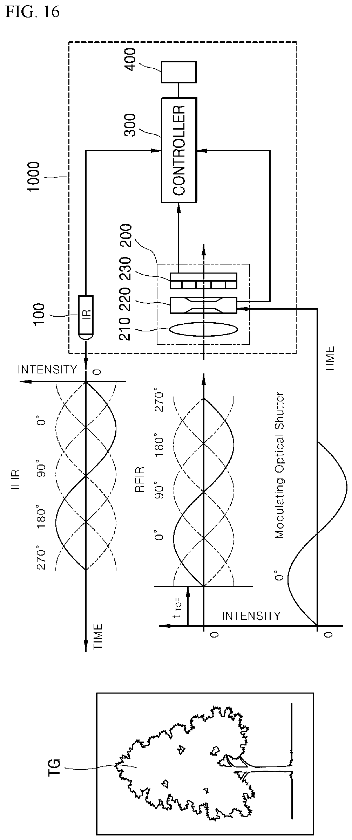

FIG. 15 is a block diagram showing a depth sensor control system according to an embodiment of the present disclosure. FIG. 16 shows a method of driving the depth sensor control system in FIG. 15.

Referring to FIGS. 15 and 16, the depth sensor control system 1000 according to an embodiment of the present disclosure includes a light emitter 100, a light receiver 200, and a controller 300.

Specifically, the light emitter 100 transmits light to an object TG.

In this case, the light emitter 100 may transmit the light in an infrared ray (IR) or near infrared ray region to the object TG.

For reference, this is only an example, and the light emitter 100 may transmit light of a different wavelength (e.g., laser, ultrahigh frequency, radio frequency (RF) signal, ultraviolet ray (UV). Hereinafter, the light emitter 100 to transmit the IR is described as an example.

An intensity and wavelength of the transmitted light may be adjusted based on a magnitude of driving voltage or power applied to the light emitter 100. An output (Ps) of the light emitter 100 is controlled by the sensor controller 310.

Light transmitted by the light emitter 100 may be reflected by the surface of the object TG, for example, by skin or clothing. A phase difference between the light transmitted by the light emitter 100 and the light reflected from the object TG may occur based on a distance between the light emitter 100 and the object TG.

The light receiver 200 senses light (e.g., IR) that is transmitted by the light emitter 100 and reflected from the object TG.

The light receiver 200 includes a lens 210, an optical shutter 220, and an image sensor 230. However, this is only an example, and the light receiver 200 may be implemented by omitting some components or adding additional components.

For example, the lens 210 collects the IR reflected from the object TG.

The optical shutter 220 is positioned on a path through which the light reflected from the object TG travels and may change the IR intensity by adjusting an exposure time (Texp) of the reflected light.

In addition, the optical shutter 220 may modulate the wavelength of the light reflected from the object TG by adjusting the transmittance of the light reflected from the object TG.

In addition, the light emitted from the light emitter 100 may be modulated by applying a specific frequency and the optical shutter 220 may drive at a same frequency as the specific frequency. A shape of the reflected light modulated by the optical shutter 220 may vary depending on a phase of light incident on the optical shutter 220.

FIG. 16 shows a graph corresponding to a change in intensity with respect to time of light (Illuminating IR profile; hereinafter ILIR) transmitted by a light emitter 100 and a graph corresponding to a change in intensity with respect to time of a light reflected from an object TG (reflecting IP profile; hereinafter; RFIR). FIG. 16 also shows a change in transmittance of the optical shutter 220 with respect to time.

The light emitter 100 may sequentially transmit the light ILIR to the object TG. In this case, a plurality of lights ILIR output from the light emitter 100 may be transmitted to the object TG with an idle time and may be transmitted with different phases.

For example, when the light emitter 100 transmits four lights ILIR to the object TG, the transmitted lights ILIR may have phases of 0 degrees, 90 degrees, 180 degrees, and 270 degrees, respectively.

Subsequently, the reflected lights RFIR reflected from the object TG may independently pass through the lens 210 and the optical shutter 220 and be incident on the image sensor 230.

In this case, the transmittance of the optical shutter 220 may change over time. In addition, the transmittance of the optical shutter 220 may change according to a level of a bias voltage applied to the optical shutter 220 in a specific wavelength region. Therefore, a waveform may be modulated as the reflected lights RFIR pass through the optical shutter 220.

The modulated waveform of the reflected lights RFIR may be changed based on the phase of the reflected lights RFIR and changes in transmittance of the optical shutter 220 over time.

Subsequently, the image sensor 230 may capture the reflected lights RFIR modulated by the optical shutter 220 to determine a phase difference between the reflected lights RFIR and the transmitted lights ILIR.

In this case, the image sensor 230 senses the intensity and the phase of light that has been condensed by the lens 210 and passed through the optical shutter 220. The image sensor 230 may include a complementary metal oxide semiconductor (CMOS) sensor or a charge coupled device (CCD).

The controller 300 may generate depth information of the object TG based on the intensity and the phase of light sensed by the image sensor 230.

The controller 300 includes a sensor controller 310 and a depth calculator 320.

For example, the sensor controller 310 may adjust an exposure time (Texp) of the light receiver 200 or the output (Ps) of the light emitter 100 based on the measured intensity of light (i.e., an amount of light) reflected from the object TG.

When the intensity of light received by the light receiver 200 is not within an appropriate range, depth of the object TG may not be properly measured.

To correct this, the sensor controller 310 decreases the exposure time (Texp) of the light receiver 200 or the output (Ps) of the light emitter 100 if an excessive amount of light is received.

If an insufficient amount of light is received, the sensor controller 310 increases the exposure time (Texp) of the light receiver 200 or the output (Ps) of the light emitter 100.

A detailed description thereof is described below.

Meanwhile, the depth calculator 320 calculates a phase difference of light measured after being reflected from the object TG and generates pixel depth information of the object TG based on the calculated phase difference of light.

That is, when the depth of a partial area of the object TG is not measured because an appropriate amount of light is not received due to the external light source or the reflectance of the object TG, the controller 300 may automatically adjust the intensity of light to measure accurate depth.

For reference, the depth sensor control system 1000 of the present disclosure may include a display 400 to visually display depth information of the object TG to a user. However, this is only an example, and the present disclosure is not limited thereto.

Further, although not clearly shown in the drawings, the depth sensor control system 1000 may transmit an operation command to the controller 300 using an interface (not shown).

For example, the interface (not shown) may include a touch panel disposed on the display 400, a microphone to receive a user's voice command, a recognizing device to recognize a user's gesture, and the like.

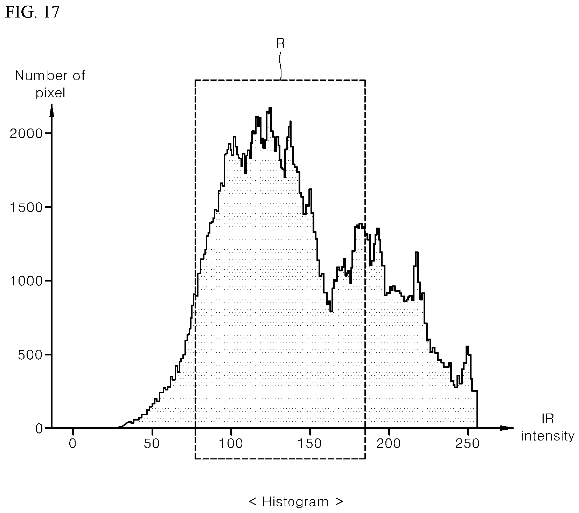

FIG. 17 is a graph showing a histogram used by the sensor controller in FIG. 15.

Referring to FIG. 17, a sensor controller 310 uses a histogram generated based on an intensity of received light to control an exposure time (Texp) of a light receiver 200 and an output (Ps) of an light emitter 100.

Specifically, the sensor controller 310 generates the histogram showing the intensity of IR incident on the light receiver 200.

An X-axis of the histogram represents an IR intensity and an Y-axis of the histogram represents a number of pixels. For reference, ranges of the X-axis and Y-axis in the histogram may be variously modified and implemented.

A range (R) of an appropriate intensity (hereinafter; an appropriate range (R)) of the IR is set in the histogram to accurately measure the depth.

The appropriate range (R) in the histogram is determined to be an area with a stable depth through a previously executed experiment and the appropriate range (R) information of the histogram may be stored the memory of the controller 300 in advance to be used.

For example, the appropriate range (R) of the histogram may be set to have the IR of equal to or greater than 75 and equal to or less than 180, but the present disclosure is not limited thereto.

In order for the depth calculator 320 to accurately measure the depth of the object TG, a ratio of the light intensity in the appropriate range (R) in the histogram may be provided within a predetermined reference ratio range.

In this case, the reference ratio range may be set based on a look-up table that has been experimentally and previously generated and stored. The look-up table may be stored in advance in the memory of the controller 300 and used by the sensor controller 310.

If the ratio of the light intensity within to the appropriate range (R) to the intensity of the total light does not fall within the reference ratio range, the sensor controller 310 adjusts the exposure time (Texp) of the light receiver 200.

If the ratio of the light intensity within the appropriate range (R) is greater than an upper limit of the reference ratio range, the sensor controller 310 reduces the exposure time (Texp) of the light receiver 200, and when the ratio of the light intensity within the appropriate range (R) is less than a lower limit of the reference ratio range, the sensor controller 310 increase the exposure time (Texp) of the light receiver 200.

For example, assuming that the reference ratio range is 70% to 80%, when the ratio of the light intensity within the appropriate range (R) is 60%, the sensor controller 310 may increase the exposure time (Texp) of the light receiver 200. If the ratio of the intensity of light within the appropriate range (R) is 90%, the sensor controller 310 decreases the exposure time (Texp) of the light receiver 200.

For reference, in another embodiment of the present disclosure, only a specific reference value may exist in the reference ratio range.

In this case, the sensor controller 310 adjusts the exposure time (Texp) of the light receiver 200 if the ratio of the intensity of light in the appropriate range R to the intensity of the total light is less than the reference ratio range.

If the reference ratio range is 75 percent and the ratio to the intensity of light belonging to the appropriate range (R) is 70 percent, the sensor controller 310 increases the exposure time (Texp) of the light receiver 200.

The sensor controller 310 may adjust the exposure time (Texp) of the light receiver 200 only within an appropriate exposure time range.

The appropriate exposure time range refers to an exposure time range in which the depth sensor control system 100 may obtain an appropriate response speed and depth accuracy.

That is, the exposure time (Texp) of the light receiver 200 may be adjusted only between an upper boundary value (T1) and a lower boundary value (T2) of the appropriate exposure time range.

If the exposure time (Texp) of the light receiver 200 is adjusted to correspond to the upper boundary value (T1) or the lower boundary value (T2), the sensor controller 310 does not adjust the exposure time (Texp), but adjust the output (Ps) of the light emitter 100.

Hereinafter, a method of adjusting the output (Ps) of the light emitter 100, rather than the exposure time (Texp), to obtain an appropriate amount of light by the sensor controller 310 is described in detail.

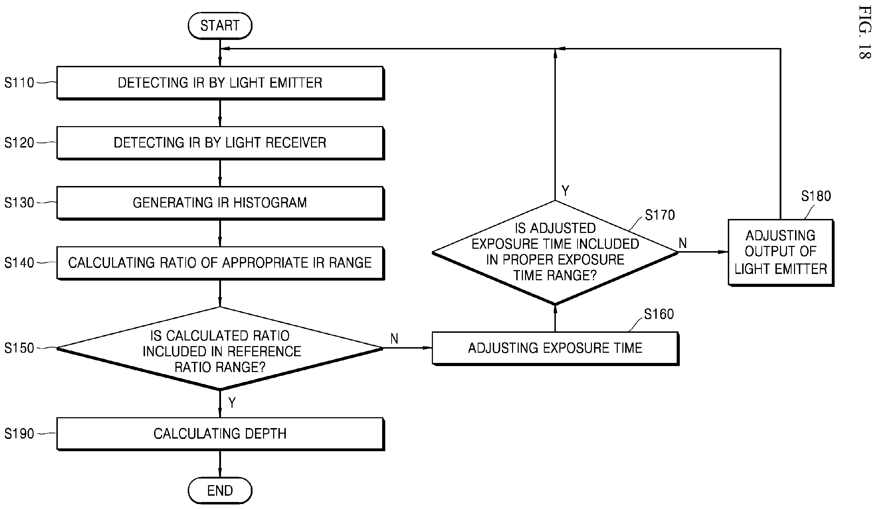

FIG. 18 is a flowchart showing an operation of the depth sensor control system in FIG. 15.

Referring to FIG. 18, for the operation of the depth sensor control system according to an exemplary embodiment of the present disclosure, a light emitter 100 emits IR to an object TG (S110). The emitted IR are reflected from the object TG and received by a light receiver 200.

Subsequently, the light receiver 200 detects the IR reflected from the object TG (S120). In this case, the intensity of IR received by the light receiver 200 may vary depending on reflectance of an external light source or the object TG.

Subsequently, a sensor controller 310 generates an infrared histogram based on the intensity of IR received by the light receiver 200 (S130). In this case, an appropriate range (R) of IR is set in the histogram for accurately measuring depth The appropriate range (R) in the histogram is determined to be an area where the object has a most suitable depth through a previously executed experiment and may be stored in the memory of the controller 300 in advance to be used.

Subsequently, the sensor controller 310 calculates a ratio of an intensity of IR within the appropriate range (R) to the intensity of total IR (S140).

Subsequently, the sensor controller 310 derives a reference ratio range for obtaining reliability of depth measurement based on a look-up table that has been experimentally and previously generated and stored.

Subsequently, the sensor controller 310 determines whether the calculated ratio is within the reference ratio range.

If the calculated ratio falls within the reference ratio range, the depth calculator 320 calculates the depth of each pixel based on the data sensed by the light receiver 200 (S190).

If the calculated ratio is not within the reference ratio range, the sensor controller 310 adjusts the exposure time (Texp) of the light receiver 200 (S160).

If the ratio of the intensity of infrared rays belonging to the appropriate range (R) is greater than the upper limit of the reference ratio range, the sensor controller 310 reduces the exposure time (Texp) of the light receiver 200. If the ratio of the intensity of infrared rays belonging to the appropriate range (R) is less than a lower limit of the reference ration range, the sensor controller 310 increases the exposure time (Texp) of the light receiver 200.

For reference, in another embodiment of the present disclosure, a specific reference value may only exist in the reference ratio range. In this case, if the ratio of the intensity of light in the appropriate range R to the intensity of the total light is less than the reference ratio range, the sensor controller 310 increases the exposure time (Texp) of the light receiver 200.

For example, the sensor controller 310 may adjust the exposure time (Texp) of the light receiver 200 only within a range of an appropriate exposure time.

Subsequently, the sensor controller 310 determines whether the adjusted exposure time (Texp) falls within the appropriate exposure time range (S170). The appropriate exposure time range refers to an exposure time range in which the depth sensor control system 1000 may obtain an appropriate response speed and depth accuracy.

That is, the exposure time (Texp) of the light receiver 200 may be adjusted only between the upper boundary value (T1) and the lower boundary value (T2) of the appropriate exposure time range.

If the adjusted exposure time (Texp) does not fall within in the appropriate exposure time range, the sensor controller 310 adjusts the output (Ps) of the light emitter 100 (S180).

If the adjusted exposure time (Texp) corresponds to the upper boundary value of the appropriate exposure time range, the sensor controller 310 increases the output of the light emitter 100. If the adjusted exposure time (Texp) corresponds to the lower boundary value of the appropriate exposure time range, the sensor controller 310 reduces the output of the light emitter 100.

Subsequently, the sensor controller 310 repeatedly performs S110 to S170 described above.

Even if the adjusted exposure time (Texp) falls within the appropriate exposure time range, the sensor controller 310 repeatedly performs S110 to S150 described above.

Therefore, the sensor controller 310 may adjust the exposure time (Texp) of the light receiver 200 and the output (Ps) of the light emitter 100 using the histogram generated based on the IR intensity measured by the light receiver 20 to obtain a fast response time for responding to amount of light adjusted to accurately measure the depth of the object.

Therefore, the overall reaction speed of the depth sensor control system 1000 using the depth sensor may be increased and the satisfaction of the user using the device may be improved.

In addition, the depth sensor control system 1000 according to the present disclosure may adjust the amount of incident light by performing the function for measuring the IR intensity, by the depth sensor, thereby measuring the accurate depth of the object without additional light-amount control components. Therefore, the manufacturing cost of the depth sensor may be reduced and the profit of the manufacturer may be increased.

Meanwhile, reference numerals used in FIGS. 15 to 18 are applied only to FIGS. 15 to 18.

The exemplary embodiments described above are to be understood as illustrative and not restrictive in all respects, and the scope of the present invention is defined by the following claims.

## Claims

1. A robot cleaner, comprising:
a housing (112, 114) comprising a suction inlet (11) configured to suction foreign substances, a suction motor configured to generate a suction force, and a discharge outlet (113) configured to discharge the suctioned air to an outside thereof;
a driver (130) configured to move the robot cleaner;
an agitator (132) disposed under the housing (112, 114) and configured to move the foreign substances located on the floor to the suction inlet (11) by performing rotation;
a constraint prevention filter portion (140) configured to perform a function for blocking entry of an obstacle provided at a position in a moving direction of the robot cleaner (100) into the agitator (132), the constraint prevention filter portion (140) comprising a constraint prevention filter (142), a rotary shaft (143) to couple to the constraint prevention filter (142), and a filter driver (144) to control a position of the rotary shaft (143);
a sensor (120) disposed on the housing (112, 114) and configured to detect an obstacle positioned in the first direction; and
a controller (110) configured to control the operation of each of the driver (130) and the filter driver (144) based on types of obstacles detected by the sensor (120),
**characterized in that** the constraint prevention filter (142) has a shred shape including a plurality of thin and long strings and prevents the obstacle of a predetermined size or more from entering the inner side of the main housing (112), and
**in that** the constraint prevention filter (142) is positioned to face the moving direction with respect to the housing (112, 114).

2. The robot cleaner of claim 1, wherein the controller (110) is configured to:
classify the detected obstacle into an avoiding obstacle or a climbing obstacle by comparing data measured by the sensor (120) and previously stored data,
control the driver (130) to move while avoiding the obstacle in case that the obstacle is classified as the avoiding obstacle, and
control the filter driver (144) to accommodate the constraint prevention filter (140) in the housing (112, 114) in case that the obstacle is classified as the climbing obstacle.

3. The robot cleaner of claim 1, wherein the controller (110) is configured to control the driver (130) to move while avoiding the obstacle in case that the obstacle is not detected at a position farther than a reference distance and is detected in front of the constraint prevention filter (142).

4. The robot cleaner of claim 1, wherein the controller (110) is configured to control the filter driver (144) to move the constraint prevention filter (142) to an inside of the housing (112, 114) when a resistance having a value equal to or greater than a reference value is applied to the constraint prevention filter (142).

5. The robot cleaner of claim 1, wherein the controller (110) is configured to control the driver (130) to move in a moving direction thereof without changing the position of the constraint prevention filter (142) when a resistance having a value less than a reference value is applied to the constraint prevention filter (142).

6. The robot cleaner of claim 1, wherein the housing (112, 114) comprises:
a main body (112) defining the suction inlet (11), the suction motor, and the discharge outlet (113) and
a nozzle (114) protruding from one side of the main body (112) and comprising the constraint prevention filter portion (140).

7. The robot cleaner of claim 6,
wherein the main body (112) has a height greater than a height of the nozzle (114),
wherein the sensor (120) is disposed at an upper end of the main body (112), and
wherein the constraint prevention filter (142) has one end protruding to an outside of the nozzle (114).

## Patentansprüche

1. Reinigungsroboter, umfassend:
ein Gehäuse (112, 114), das einen Saugeinlass (11) zum Ansaugen von Fremdstoffen, einen Saugmotor zum Erzeugen einer Saugkraft und einen Ableitauslass (113) zum Ableiten der angesaugten Luft nach außen umfasst;
einen Antrieb (130) zum Fortbewegen des Reinigungsroboters;
ein Rührwerk (132), das unter dem Gehäuse (112, 114) angeordnet und dazu ausgelegt ist, die auf dem Boden befindlichen Fremdstoffe durch Rotation zum Saugeinlass (11) zu bewegen;
einen Behinderungsvorbeugefilterabschnitt (140), der dazu ausgelegt ist, eine Funktion zum Sperren des Eintretens von einem Hindernis, das an einer Stelle in einer Fortbewegungsrichtung des Reinigungsroboters (100) vorliegt, in das Rührwerk (132) auszuführen, wobei der Behinderungsvorbeugefilterabschnitt (140) einen Behinderungsvorbeugefilter (142), eine Drehwelle (143) zum Koppeln mit dem Behinderungsvorbeugefilter (142) und einen Filterantrieb (144) zum Steuern einer Position der Drehwelle (143) umfasst;
einen Sensor (120), der an dem Gehäuse (112, 114) angeordnet und dazu ausgelegt ist, ein in der ersten Richtung befindliches Hindernis zu erfassen; und
eine Steuerung (110) zum Steuern des Betriebs sowohl des Antriebs (130) als auch des Filterantriebs (144) auf der Grundlage von Arten von Hindernissen, die von dem Sensor (120) erfasst werden,
**dadurch gekennzeichnet, dass** der Behinderungsvorbeugefilter (142) streifenartig mit einer Vielzahl von dünnen, langen Schnüren ausgebildet ist und verhindert, dass das Hindernis einer vorbestimmten Größe oder darüber in die Innenseite des Hauptgehäuses (112) eintritt, und
dass der Behinderungsvorbeugefilter (142) so positioniert ist, dass er in Bezug auf das Gehäuse (112, 114) in die Fortbewegungsrichtung weist.

2. Reinigungsroboter nach Anspruch 1, wobei die Steuerung (110) dazu ausgelegt ist,
das erfasste Hindernis durch Vergleich der vom Sensor (120) gemessenen Daten und der zuvor gespeicherten Daten in ein zu umfahrendes Hindernis oder ein zu überwindendes Hindernis zu klassifizieren,
den Antrieb (130) so anzusteuern, dass er sich unter Umfahren des Hindernisses fortbewegt, wenn das Hindernis als zu umfahrendes Hindernis klassifiziert wurde, und
den Filterantrieb (144) so anzusteuern, den Behinderungsvorbeugefilter (140) in dem Gehäuse (112, 114) aufzunehmen, wenn das Hindernis als zu überwindendes Hindernis klassifiziert wurde.

3. Reinigungsroboter nach Anspruch 1, wobei die Steuerung (110) dazu ausgelegt ist, den Antrieb (130) so anzusteuern, dass er sich unter Umfahren des Hindernisses fortbewegt, wenn das Hindernis nicht an einer Position erfasst wurde, die weiter als ein Referenzabstand entfernt ist, und vor dem Behinderungsvorbeugefilter (142) erfasst wurde.

4. Reinigungsroboter nach Anspruch 1, wobei die Steuerung (110) dazu ausgelegt ist, den Filterantrieb (144) so anzusteuern, dass er den Behinderungsvorbeugefilter (142) in einen Innenraum des Gehäuses (112, 114) bewegt, wenn ein Widerstand mit einem Wert, der gleich oder größer als ein Referenzwert ist, an den Behinderungsvorbeugefilter (142) angelegt wird.

5. Reinigungsroboter nach Anspruch 1, wobei die Steuerung (110) dazu ausgelegt ist, den Antrieb (130) so anzusteuern, dass er sich in seiner Fortbewegungsrichtung bewegt, ohne die Position des Behinderungsvorbeugefilters (142) zu ändern, wenn ein Widerstand mit einem Wert, der kleiner als ein Referenzwert ist, an den Behinderungsvorbeugefilter (142) angelegt wird.

6. Reinigungsroboter nach Anspruch 1, wobei das Gehäuse (112, 114) umfasst:
einen Hauptkörper (112), der den Saugeinlass (11), den Saugmotor und den Ableitauslass (113) definiert, und
eine Düse (114), die von einer Seite des Hauptkörpers (112) vorsteht und den Behinderungsvorbeugefilterabschnitt (140) umfasst.

7. Reinigungsroboter nach Anspruch 6,
wobei der Hauptkörper (112) eine Höhe hat, die größer ist als die Höhe der Düse (114),
wobei der Sensor (120) an einem oberen Ende des Hauptkörpers (112) angeordnet ist, und
wobei ein Ende des Behinderungsvorbeugefilters (142) zu einer Außenseite der Düse (114) hin vorsteht.

## Revendications

1. Robot nettoyeur, comprenant :
un boîtier (112, 114) comprenant une entrée d'aspiration (11) configurée pour aspirer des substances étrangères, un moteur d'aspiration configuré pour générer une force d'aspiration, et une sortie d'évacuation (113) configurée pour évacuer l'air aspiré vers l'extérieur de celui-ci ;
un dispositif d'entraînement (130) configuré pour déplacer le robot nettoyeur ;
un agitateur (132) disposé sous le boîtier (112, 114) et configuré pour déplacer les substances étrangères situées sur le sol vers l'entrée d'aspiration (11) en effectuant une rotation ;
une partie formant filtre anti-contrainte (140) configurée pour effectuer une fonction pour bloquer l'entrée d'un obstacle prévu sur une position dans une direction de déplacement du robot nettoyeur (100) dans l'agitateur (132), la partie formant filtre anti-contrainte (140) comprenant un filtre anti-contrainte (142), un arbre de rotation (143) pour coupler le filtre anti-contrainte (142), et un dispositif d'entraînement de filtre (144) pour commander une position de l'arbre de rotation (143) ;
un capteur (120) disposé sur le boîtier (112, 114) et configuré pour détecter un obstacle positionné dans la première direction ; et
un dispositif de commande (110) configuré pour commander le fonctionnement de chacun du dispositif d'entraînement (130) et du dispositif d'entraînement de filtre (144) sur la base de types d'obstacles détectés par le capteur (120),
**caractérisé en ce que** le filtre anti-contrainte (142) présente une forme déchiquetée comportant une pluralité de tiges fines et longues et empêche l'obstacle d'une taille prédéterminée ou plus d'entrer dans le côté intérieur du boîtier (112) principal, et
**en ce que** le filtre anti-contrainte (142) est positionné pour faire face à la direction de déplacement par rapport au boîtier (112, 114).

2. Robot nettoyeur selon la revendication 1, dans lequel le dispositif de commande (110) est configuré pour :
classer l'obstacle détecté en obstacle à éviter ou en obstacle à escalader en comparant des données mesurées par le capteur (120) et des données précédemment mémorisées,
commander le dispositif d'entraînement (130) pour qu'il se déplace tout en évitant l'obstacle dans le cas où l'obstacle est classé comme obstacle à éviter, et
commander le dispositif d'entraînement de filtre (144) pour loger le filtre anti-contrainte (140) dans le boîtier (112, 114) dans le cas où l'obstacle est classé comme obstacle à escalader.

3. Robot nettoyeur selon la revendication 1, dans lequel le dispositif de commande (110) est configuré pour commander le dispositif d'entraînement (130) pour qu'il se déplace tout en évitant l'obstacle dans le cas où l'obstacle n'est pas détecté sur une position plus éloignée qu'une distance de référence et est détecté devant le filtre anti-contrainte (142).

4. Robot nettoyeur selon la revendication 1, dans lequel le dispositif de commande (110) est configuré pour commander le dispositif d'entraînement de filtre (144) pour déplacer le filtre anti-contrainte (142) vers un intérieur du boîtier (112, 114) lorsqu'une résistance présentant une valeur supérieure ou égale à une valeur de référence est appliquée au filtre anti-contrainte (142).

5. Robot nettoyeur selon la revendication 1, dans lequel le dispositif de commande (110) est configuré pour commander le dispositif d'entraînement (130) pour qu'il se déplace dans une direction de déplacement de celui-ci sans changer la position du filtre anti-contrainte (142) lorsqu'une résistance présentant une valeur inférieure à une valeur de référence est appliquée au filtre anti-contrainte (142).

6. Robot nettoyeur selon la revendication 1, dans lequel le boîtier (112, 114) comprend :
un corps principal (112) définissant l'entrée d'aspiration (11), le moteur d'aspiration, et la sortie d'évacuation (113) et
une buse (114) faisant saillie à partir d'un côté du corps principal (112) et comprenant la partie formant filtre anti-contrainte (140).

7. Robot nettoyeur selon la revendication 6,
dans lequel le corps principal (112) présente une hauteur supérieure à une hauteur de la buse (114),
dans lequel le capteur (120) est disposé sur une extrémité supérieure du corps principal (112), et
dans lequel le filtre anti-contrainte (142) présente une extrémité faisant saillie vers un extérieur de la buse (114).
